# EUROPEAN PATENT APPLICATION

(11) **EP 1 561 376 A2**
(43) Date of publication of application: **10.08.2005**
(21) Application number: 05250581.5
(22) Date of filing: 02.02.2005
(51) Int. Cl.: A01K 67/033, A01K 1/02, B65D 77/04, B65D 85/50, A61B 19/02

(54) **Apparatus for carriage and/or disposal of larvae**

(30) Priority: 04.02.2004 GB 0402405
(71) Applicant: Bro Morgannwg NHS Trust, Bridgend CF31 1RQ (GB)
(72) Inventor: Thomas, Steven, Radyr Cardiff CF15 8EH (GB); Griffiths, Darren, Treorchy Rhondda Cynon Taff CF42 6NX (GB)
(74) Representative: Cawdell, Karen Teresa

(57) **Abstract**

Apparatus (1) for carriage and/or disposal of larvae comprising a container (2) arranged to hold one or more larvae, the container having indicia thereon which indicates that dangerous and/or harmful goods are held herein, a removable sleeve (3) which at least partially surrounds the container, the sleeve arranged such that the indicia on the container is at least partially obscured by the sleeve when the sleeve surrounds the container.

## Description

The present invention relates to an apparatus and method for carriage and/or disposal of larvae.

In the UK and many other countries specific legislation is in place regarding the carriage and disposal of dangerous goods for example biohazardous material and clinical waste. In the UK the legislation in place is Statutory Instrument 1996 No. 2092 *'The Carriage of Dangerous Goods (Classification, Packaging and Labelling) and Use of Transportable Pressure Receptacles Regulation'.* This legislation requires that containers used for carriage of dangerous goods are labelled with the correct symbol for the particular type of goods contained therein and other identification markings. The container must also meet certain physical requirements to prevent leakage etc and in the UK a special regulatory body carries out the required test to certify the containers as being suitable for the carriage of dangerous goods.

It is known to use live sterile larvae (maggots) of *Lucilia sericata* to treat wounds. The larvae are applied to the wound and covered with dressings to prevent the larvae escaping. After a period of time (usually a couple of days) the larvae and dressings are removed. In the UK and many other countries, carriage of contaminated larvae and/or dressings removed from a wound (clinical waste) is required to comply with legislation as mentioned above.

The present invention provides an improved apparatus and method for the carriage and/or disposal of dangerous goods (clinical waste).

According to the present invention, there is provided apparatus for carriage and/or disposal of larvae comprising a container arranged to hold one or more larvae, the container having indicia thereon which indicates that dangerous and/or harmful goods are held herein, a removable sleeve which at least partially surrounds the container, the sleeve arranged such that the indicia on the container is at least partially obscured by the sleeve when the sleeve surrounds the container.

By providing a removable sleeve which at least partially obscures the indicia on the container, the apparatus of the present invention can advantageously be used for carriage of non dangerous goods and converted into a container for carriage of dangerous goods by removal of the sleeve.

The sleeve preferably substantially obscures the indicia on the container.

The sleeve preferably includes at least one releasable fixing means, which fix the sleeve in a position, which at least partially surrounds the container so as to at least partially obscure the markings on the container. Advantageously the sleeve therefore stays in place so that the markings are obscured until the fixing means is released. Preferably, the sleeve includes two or more fixing means

The apparatus preferably further includes an opening mechanism. The opening mechanism may be arranged to co-operate with releasable fixing means such that when the container is closed the sleeve is fixed in a position at least partially surrounding the container and when the container is opened the sleeve can be removed from the container.

In a preferred embodiment of the present invention, the container has a lid and the releasable fixing means of the sleeve comprises one or more flaps which slot under the lid when the lid is closed and are released when the lid is opened.

The indicia on the container can be any indicia including symbols, signs, numbers, letters, or a particular colour or pattern of colours which indicate that maggots are in the container. In a preferred embodiment the container is partially or completely yellow. In a further preferred embodiment, the markings indicate biohazardous and/or clinical waste, for example the symbol classifying 'Infectious substances' with class number 6.2 from Schedule 1, Part I of Statutory Instrument 1996 No. 2092 *'The Carriage of Dangerous Goods (Classification, Packaging and Labelling) and Use of Transportable Pressure Receptacles Regulation'.* The hazardous properties of the Classification 'Infectious substances' from the above mentioned legislation are given as 'a substance which either contains viable micro-organisms that are known or reasonably believed to cause disease in animals or humans or genetically-modified micro-organisms and organisms which are infectious'.

A yellow container with the 'Infectious substances' symbol is typically used for carriage of larvae and dressing material which have been removed from a wound following treatment with the larvae as hereinbefore mentioned in more detail. In a particularly preferred embodiment of the present invention therefore, the container is at least partially yellow and has the symbol for 'Infectious substances' thereon.

The sleeve preferably has markings thereon. The sleeve markings may be advertising material, instructions for use of the apparatus, instructions for use of the goods in the container, instructions for safe carriage and disposal of the goods after use, and the like.

Advantageous larvae typically may be packaged and transported to the point of sale in the container with the sleeve at least partially surrounding the container so that the indicia on the container, for example the 'Infectious substances' symbol, is at least partially obscured. Following treatment with the larvae, the contaminated larvae and dressing material can be placed in the container and the sleeve removed so that the 'Infectious substances' symbol is clearly in view.

A plastic bag, which is typically yellow and may have the 'Infectious substances' symbol, may be provided together with means for closing the bag, such as a plastic tie or the like. The contaminated larvae and dressing material or other clinical waste can be placed in the plastic bag which is closed with the tie and placed in the container. The sleeve is removed so that the markings on the container are clearly in view. Carriage of used larvae and dressing material in this way complies with Statutory Instrument 1996 No. 2092. The container may be disposed of in accordance with local policy.

The container preferably includes internal closure means. The closure means is preferably a tray. The tray preferably fits snugly in the container and can be used to hold an article, such as the yellow plastic bag and tie mentioned above. The tray can be removed from the container by pulling on one of the edges. Once the "used" larvae have been placed back into the container, the tray can advantageously be inverted and slotted back into the container above the dangerous goods. As the inverted tray has a smooth bottom and fits snugly in the container it prevents access to the dangerous goods.

The container and sleeve can be made of any material such as plastic or cardboard, however if the container is made of cardboard, it is typically necessary to provide a plastic bag for the dangerous goods to be placed in before they are placed in the container.

According to a second embodiment of the present invention, there is provided an apparatus comprising a container and a removable sleeve which at least partially surrounds the container, wherein the sleeve has releasable fixing means which fix the sleeve in position at least partially surrounding the container.

The releasable fixing means preferably cooperate with the opening mechanism of the container, such that when the container is closed the sleeve is fixed in place at least partially surrounding the container and when the container is opened the sleeve can be removed.

In a preferred embodiment of the present invention, the container has a lid and the releasable fixing means of the sleeve is one or more flaps which slot under the lid when the lid is closed and are released when the lid is opened.

According to the present invention, there is provided a method for carriage and/or disposal of larvae, the method comprising:
providing an apparatus in accordance with the first embodiment of the present invention:
   placing larvae in the container; and
   positioning the sleeve on the container so as to obscure the indica from view.

The method preferably further includes tansporting the apparatus to a desired location, and removing the larvae from the container for application.

Subsequently, "used" larvae are placed in the container without the sleeve being around the container so that the indicia on the container is visible.

Sterile dressing material and/or contaminated dressing material removed from a wound of a patient, may also be positioned in the container.

Preferably, the method further includes removing the sleeve from the container to reveal the markings on the container.

Therefore according to a further embodiment of the present invention there is provided a method of carriage of sterile and non-sterile larvae, the method comprising;
providing an apparatus in accordance with the first embodiment of the present invention;
placing sterile larvae in the container with the sleeve thereon for carriage of the larvae to the point of use;
after use of the larvae, placing the non-sterile larvae in the container; and
removing the sleeve from the container for carriage and/or disposal of the non-sterile larvae.

The larvae are preferably used for the treatment of wounds. Clinical waste (such as used dressings) may also be placed in the container with used larvae. Carriage of the used larvae and any contaminated dressing material in the container with the markings thereon advantageously complies with the Statutory Instrument 1996 No. 2092 for *'The Carriage of Dangerous Goods (Classification, Packaging and Labelling) and Use of Transportable Pressure Receptacles Regulation'* as hereinbefore mentioned in more detail.

According to yet a further aspect of the present invention, there is provided a use of apparatus according to the first aspect of the present invention in the transportation and/or disposal of larvae.

Preferably, the apparatus is also for use in the transportation and/or disposal of wound dressing material.

The invention will now be described in specific embodiments, by way of example only, and with reference to the accompanying drawings in which:
Figure 1 shows a schematic view of an apparatus for carriage and/or disposal of dangerous goods in accordance with the first or second embodiment of the present invention;
Figure 2 shows a further schematic view of an apparatus for carriage and/or disposal of dangerous goods in accordance with the first or second embodiment of the present invention;
Figure 3 shows a schematic view of a template that makes up the container of the apparatus in accordance with the first embodiment of the present invention;
Figure 4 shows a schematic view of a template that makes up the sleeve of the apparatus in accordance with the first or second embodiment of the present invention;
Figure 5 shows an example of the markings on the container of the apparatus in accordance with the first embodiment of the present invention; and
Figure 6 shows a schematic view of a template that makes up the closure means of the apparatus of the first embodiment of the present invention.

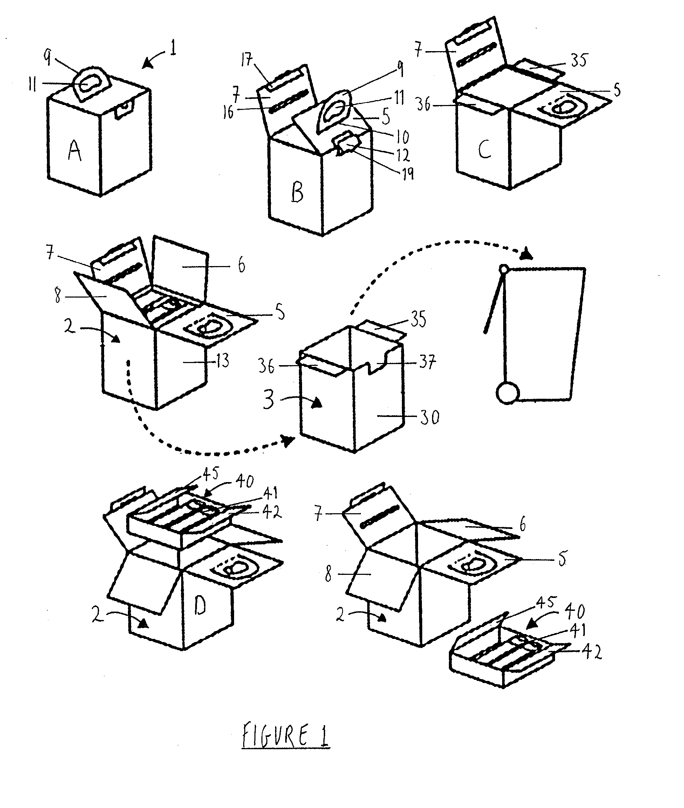

Referring to the drawings and initially to Figure 1, there is shown an apparatus 1 comprising a container 2 and an outer sleeve 3 which surrounds the container.

Sleeve 3 comprises a four sided open ended box. Two opposed upper side edges of the sleeve have flaps 35 and 36 respectively with hinged joins. The front wall 30 of the sleeve has a rectangular section 37 cut out from its upper edge.

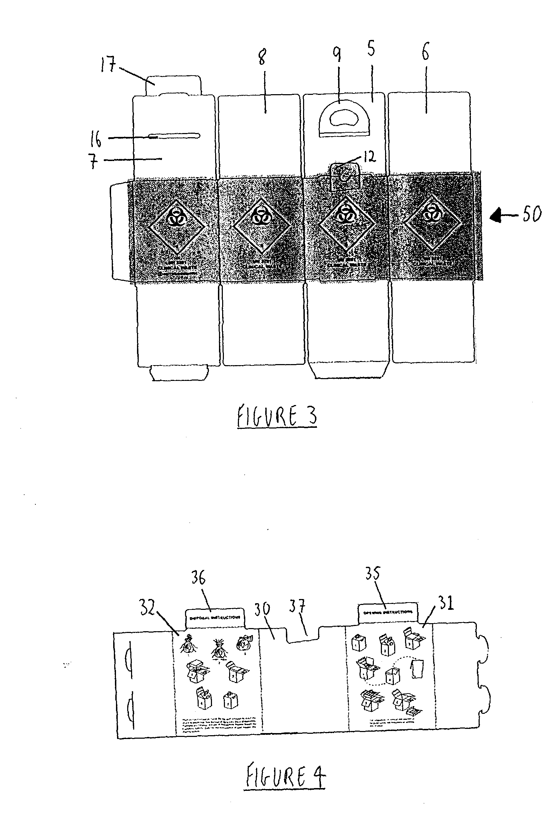

The sleeve 3 typically has promotional material for the product to be carried by the container, for example live sterile larvae of *Lucilia sericata.* Another of the walls 31 of the sleeve may have instructions for opening and/or closing the container to reach the product inside as shown in Figure 4. A further wall 32 of the sleeve may have instructions for the disposal of the used product, for example instruction regarding disposal of larvae that have been used for the treatment of wounds as shown in Figure 4.

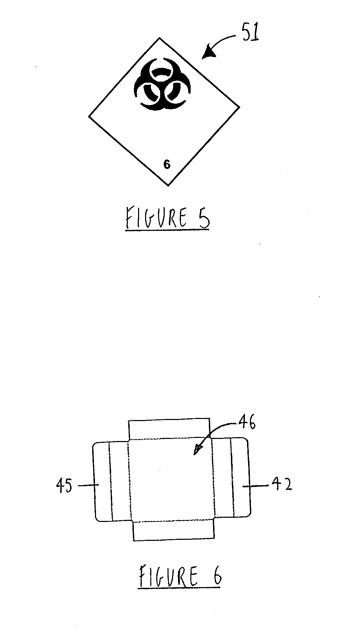

In the first embodiment of the invention, the outer surface of the container 2 has markings 50 thereon which indicate that dangerous goods are held therein as shown in Figure 3. When the apparatus is used for the carriage and/or disposal of used maggots, the container is typically yellow and has thereon a symbol 51 classifying 'Infectious substances' with class number 6.2 from Schedule 1, Part I of Statutory Instrument 1996 No. 2092 *'The Carriage of Dangerous Goods (Classification, Packaging and Labelling) and Use of Transportable Pressure Receptacles Regulation'* as shown in Figure 5.

The container 2 is closed at one end and has an opening at the other end. Each of the four edges of the opening has a flap 5, 6, 7 and 8. All the flaps 5, 6, 7 and 8 have a diameter substantially the same as the diameter of the opening.

Flap 5 has a semi-circular section 9 cut out from the flap 5 with the straight edge of the semi-circle 10 still joined to the body of the flap 5. The semi-circular section 9 has an aperture 11 therethrough and can be used as a handle to carry the container. A rectangular section 12 has been cut out from the edge of flap 5 that joins wall 13 of the container. The rectangular section 12 has a tab 19. A slot is positioned at the join between flap 5 and the wall 13 of the container.

Flap 7 has a slot 16 which lines up with the semi-circular section 9 of flap 5, so that when flap 7 is placed on top of flap 5, semi-circular section 9 can be fed through slot 16. A rectangle 17 is joined to the edge of flap 7. A further slot is positioned at the join between flap 5 and rectangle 17.

In a preferred embodiment, the container 2 is provided with a tray 40 therein as shown in Figure 1. The tray 40 has a flat bottom 46 which is typically square and has a similar cross-sectional area to the inner area of the container 3. Two opposed edges of the tray 40 have upstanding rectangular sections 42 and 45.

In use, a product, for example live sterile larvae (maggots) of *Lucilia sericata,* is placed in the container 2. The larvae are typically packaged in labelled plastic tubes with a semi-permeable membrane in the lid or net-like bags. The packaged larvae are placed on tray 40. The tray 40 fits snugly in the container 2 and is thus held in position by the walls of the container. A yellow plastic bag 41 which may have markings thereon indicating clinical waste thereon and a plastic tie 43 may optionally be placed on the tray 40. The container 2 is then slotted into position inside the sleeve 3 so that the front wall 30 of the sleeve lines up with the front wall 13 of the container. The markings on the container are now at least partially, and preferably fully, obscured by the sleeve 3.

To close the container 2 and fix the sleeve 3 in position, side flaps 6 and 8 of the container are folded down on top of the opening. Next flaps 35 and 36 of the sleeve are folded down on top of flaps 6 and 8. Flap 5 of the container is then folded down on top of flaps 35 and 36 and flaps 6 and 8. Finally, flap 7 is brought down onto flap 5 and the semi-circular section 9 of flap 5 fed through slot 16 of flap 7. Rectangular section 17 of flap 7 is pushed into the slot in the join between wall 13 and flap 5 of the container and rectangular section 12 is pushed through the slot in the join between rectangular section 17 and flap 7 of the container.

The closed container 2 can be carried using semi-circular section 9 which acts as a handle. The sleeve 3 is fixed in position surrounding the container 2 as flaps 35 and 36 of the sleeve are trapped under flaps 5 and 7 of the container. This is shown in drawing A of Figure 1.

To open the container, tab 19 is pulled to release rectangular section 17. Flap 7 can then be pulled upward, followed by flap 5 as shown in drawings B of Figure 1. Flaps 35 and 36 of the sleeve are released (drawing C) so that the sleeve 3 can be removed from the container 2 and disposed of. To access the product in the container 2, flaps 6 and 8 are pulled aside and tray 40 removed by grabbing one of its upstanding sections 42 or 45 (drawing D).

Once the product has been used and contaminated, for example the larvae (maggots) have been used for the treatment of wounds, the contaminated product can be placed back inside the container 2. With the sleeve 3 removed, the markings on the container which indicate the dangerous goods held therein, are clearly visible so that the container 2 can be used for carriage and/or disposal of the contaminated goods. The container 2 thus advantageously doubles as a container for carriage of non-dangerous goods, for example sterile larvae, and a container for carriage and/or disposal of dangerous goods which require specific markings for their carriage and/or disposal.

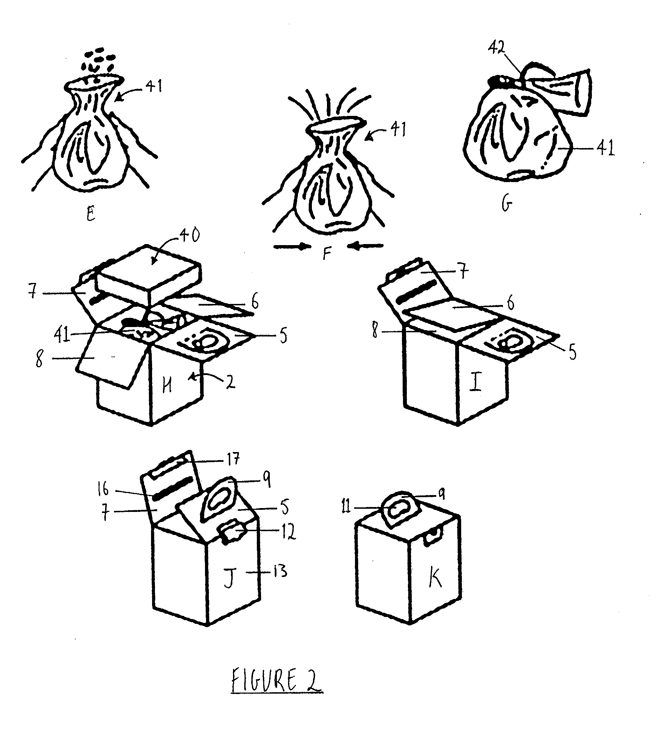

Before placing the contaminated goods, for example used larvae, in the container 2 the goods can be put in the plastic bag 41 if this is provided as shown in drawing E of Figure 2. The bag is closed (drawing F) and tied with the plastic tag 43 (drawing G) and then placed in the container 2. If the tray 40 is provided it can be turned upside down and pushed into the container on top of the contaminated goods as shown in drawing H of Figure 2. As the inverted tray 40 has a flat bottom and fits snugly against the walls of the container, access to the contaminated goods is substantially prevented.

The container is then closed by folding in flaps 6 and 8 on top of each other (drawing I), followed by flap 5 and then flap 7 (drawing J). Semi-circular Section 9 of flap 5 is fed through slot 16 of flap 7 and rectangular section 17 of flap 7 is pushed into the slot in the join between wall 13 and flap 5 of the container and rectangular section 12 is pushed through the slot in the join between rectangular section 17 and flap 7 of the container. The closed container (drawing K) can be used for carriage of the dangerous goods and is suitably in compliance with required legislation. The container 2 with the dangerous goods therein can be disposed of in accordance with local policy.

Figure 3 shows a template for the container 2 which is typically of cardboard. The template folds up and the sides are joined to make the closed bottom container 2 with flaps 5, 6, 7, 8. The markings 50 indicate that dangerous goods are carried in the container.

Figure 4 shows a template for the sleeve 3 which again is typically of cardboard. The template folds up and is joined to make a hollow sleeve 3 with open ends which can be slid around the container 2.

Figure 6 shows a template for the tray 40 which is also typically of cardboard. The template folds up to form the tray with upstanding rectangular sections 42 and 45.

Embodiments of the present invention have been described above byway of example only, and it will be apparent to a person skilled in the art that modifications and variations can be made to the described embodiments without departing from the scope of the invention as defined in the attached claims.

## Claims

1. Apparatus for carriage and/or disposal of larvae comprising a container arranged to hold one or more larvae, the container having indicia thereon which indicates that dangerous and/or harmful goods are held herein, a removable sleeve which at least partially surrounds the container, the sleeve arranged such that the indicia on the container is at least partially obscured by the sleeve when the sleeve surrounds the container.

2. Apparatus according to claim 1, wherein the sleeve substantially obscures the markings on the container.

3. Apparatus according to claim 1 or 2, wherein the sleeve has releasable fixing means.

4. Apparatus according to claim 3, wherein the releasable fixing means of the sleeve cooperate with an opening mechanism of the container, such that when the container is closed the sleeve is fixed in place at least partially surrounding the container and when the container is opened the sleeve can be removed from the container.

5. Apparatus according to claim 4, wherein the container has a lid and the releasable fixing means of the sleeve includes one or more flaps which slot under the lid when the lid is closed and are released when the lid is opened.

6. Apparatus according to any preceding claim, wherein the container is partially or substantially yellow.

7. Apparatus according to any preceding claim, wherein the indicia indicate biohazardous and/or clinical waste.

8. Apparatus according to any of claims 1 to 5, wherein the container is at least partially yellow and has the symbol for 'Infectious substances' thereon.

9. Apparatus according to any preceding claim, wherein the sleeve has markings thereon.

10. Apparatus according to any preceding claim, which further includes a plastics bag and optionally, means for closing the bag.

11. Apparatus according to claim 10, wherein the plastic bag is at least partially yellow and/or has the symbol for 'Infectious substances' thereon.

12. Apparatus according to any preceding claim, wherein the container includes internal closure means, such as a tray.

13. A method for carriage and/or disposal of larvae, the method comprising:
providing an apparatus in accordance with any of claims 1 to 12:
placing the larvae in the container; and
positioning the sleeve on the container so as to obscure the indicia from view.

14. A method according to claim 13, which further includes removing the sleeve from the container to reveal the meanings therein and inserting "non-sterile" larvae after it has been used in the treatment of a wound into the container such that the indicia on the container is not obscured.

15. A method according to claim 13 or 14, wherein non dangerous goods, such as sterile dressing are included in the container prior to removal of larvae for use

16. A method according to any of claims 13 to 15, contaminated dressing material is included in the container with the non-sterile larvae.
